Europäisches Patentamt

European Patent Office

Office européen des brevets

(19)

(11) Veröffentlichungsnummer: **0 194 611**
**B1**

(12) **EUROPÄISCHE PATENTSCHRIFT**

(45) Veröffentlichungstag der Patentschrift: **27.12.90**

(51) Int. Cl.⁵: **G 01 D 5/36**

(21) Anmeldenummer: **86103071.6**

(22) Anmeldetag: **07.03.86**

(54) **Messeinrichtung.**

(30) Priorität: **14.03.85 DE 3509102**

(43) Veröffentlichungstag der Anmeldung:
**17.09.86 Patentblatt 86/38**

(45) Bekanntmachung des Hinweises auf die
Patenterteilung:
**27.12.90 Patentblatt 90/52**

(84) Benannte Vertragsstaaten:
**AT CH DE FR GB IT LI NL SE**

(56) Entgegenhaltungen:
**DE-A-2 046 332**
**DE-A-2 952 106**
**US-A-3 749 925**

**MACHINERY, Band 99, Nr. 2558, 22. November
1961, Seiten 1211-1212; B.J. DAVIES:
"Continuous path machine tool control"**

(73) Patentinhaber: **Dr. Johannes Heidenhain GmbH
Postfach 1260
D-8225 Traunreut (DE)**

(72) Erfinder: **Nelle, Günther, Dr.-Ing.
Eichenweg 12
D-8221 Bergen (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

**Beschreibung**

Die Erfindung bezieht sich auf eine Vorrichtung gemäß dem Oberbegriff des Anspruches 1.

Derartige inkrementale Längen- oder Winkelmeßeinrichtungen sind üblich, damit beispielsweise ein für die Meßeinrichtung definierter Nullpunkt festgelegt und reproduziert werden kann.

In der DE—A—18 14 785 ist der Aufbau einer Referenzmarke zur Erzeugung eines Referenzimpulses beschrieben. Dieser Referenzimpuls entsteht durch das Abtasten eines unregelmäßigen Strichgitters. Die feinsten Striche dieses Strichgitters sind im allgemeinen so breit wie die Gitterkonstante G der Inkrementalteilung, so daß beim Abtasten dieses unregelmäßigen Strichgitters ein analoges Signal, das in der Triggerebene 360° breit ist, entsteht, wobei die Breite von 360° einer Gitterkonstanten G der Inkrementalteilung entspricht.

Ein genügend exakter Referenzimpuls läßt sich jedoch nur von einer derartigen Referenzmarke ableiten, wenn der Abtastabstand sehr klein ist und dementsprechend engen Toleranzen hinsichtlich der Abstandsschwankungen unterliegt.

Der größtmögliche Abtastabstand a zwischen Abtastgitter und Maßstab ist u.a. gegeben durch die Breite G der feinsten Striche des Referenzmarkengitters. Näherungsweise gilt $a = G^2/\lambda$, wobei $\lambda$ die Wellenlänge des zur Beleuchtung verwendeten Lichtes ist. Das ergibt z.B. für $G = 20$ µm und $\lambda = 0,9$ µm einen Abstand $a = 44$ µm.

Zur Erhöhung der Betriebssicherheit derartiger Meßeinrichtungen ist auch schon vorgeschlagen worden, mehrere Referenzmarken voneinander beabstandet auf einer Maßverkörperung vorzusehen, und die daraus abgeleiteten Impulse in der Auswertung elektrisch zusammenzufassen. Beispiele für derartige Lösungen sind in der DE—C—29 52 106 und der DE—A—31 04 972 angegeben.

Hinsichtlich des Abtastabstandes gelten hier jedoch die gleichen Kriterien, wie bei der Meßeinrichtung gemäß der bereits erwähnten DE—A—18 14 785.

Ein über die bereits erwähnten Vorrichtungen hinausgehende Meßvorrichtung mit mehreren Referenzmarken ist in der DE—A—20 46 332 beschrieben. Dieses Dokument offenbart eine Meßvorrichtung zum Messen der Lage zweier relativ zueinander beweglicher Objekte. An einem Objekt sind voneinander beabstandete Referenzmarken und an dem anderen Objekt voneinander beabstandete Abtastelemente angeordnet. Die Abstände der Referenzmarken und der Abtastelemente unterscheiden sich derart voneinander, daß sich die Referenzsignale teilweise überlappen. Die Auswertung der Referenzsignale erfolgt dort über einen Differenzverstärker, dessen Ausgangsspannung bei der gesuchten Nulllage der zu messenden Objekte "0" ist (Wenn sich die Flanken der Referenzsignale schneiden).

Von diesem Stand der Technik geht die Erfindung aus, der die Aufgabe zugrunde liegt, aus sich überlappenden Referenzsignalen exakte Referenzimpulse auf einfache Weise zu gewinnen.

Diese Aufgabe wird mit einer Vorrichtung gelöst, die die Merkmale des Anspruches 1 aufweist.

Durch Vorrichtungen mit den Merkmalen der Unteransprüche wird die Erfindung in besonders vorteilhafter Weise ausgestaltet.

Die besonderen Vorteile der erfindungsgemäßen Vorrichtung liegen darin, daß der Abtastabstand, d.h. der Abstand von den Referenzmarken zu den Abtastelementen ein Vielfaches des Abtastabstandes dieser Bauteile beim Stand der Technik betragen kann, wodurch auch die Toleranzen für die Einhaltung des Abtastabstandes größer werden.

Mit Hilfe der Zeichnungen soll die Erfindung anhand von Ausführungsbeispielen noch näher erläutert werden.

Es zeigt

Figur 1 Eine schematisch dargestellte Längenmeßeinrichtung mit zwei Referenzmarken;

Figur 2 einen Ausschnitt des Maßstabes aus der Meßeinrichtung gemäß Figur 1;

Figur 3 eine Abtastplatte für den Maßstab aus der Figur 2;

Figur 4a Referenzmarken gemäß Figur 2, stark schematisiert;

Figur 4b Referenzmarkenabtastelemente gemäß Figur 3, stark schematisiert;

Figur 4c die schematisierten Referenzsignalverläufe, die sich durch Abtastung der Referenzmarken gemäß Figur 4a mit den Referenzmarkenabtastelementen gemäß Figur 4b ergeben;

Figur 4d die getriggerten Referenzsignale als Referenzimpulse;

Figur 5a die zeitlich überlagerten Referenzsignale gemäß Figur 4c;

Figur 5b die zeitlich überlagerten Referenzimpulse gemäß Figur 4d;

Figur 5c einen resultierenden Referenzimpuls gemäß der Erfindung;

Figur 6a eine Maßverkörperung mit Referenzmarken in variierter Anordnung;

Figur 6b eine Variante einer Abtastplatte für Referenzmarken gemäß Figur 6a.

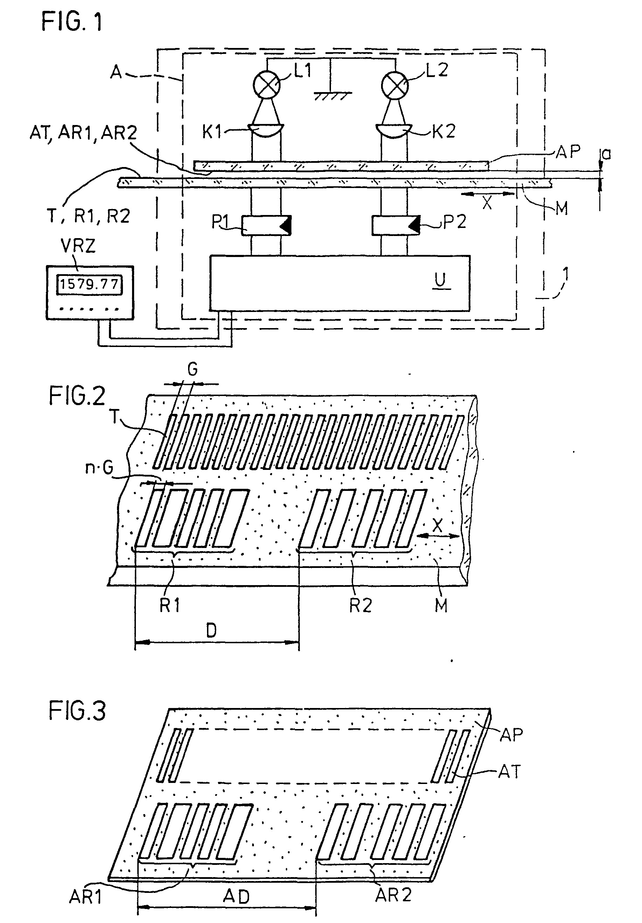

Eine in Figur 1 schematisch dargestellte Meßeinrichtung 1 arbeitet nach dem photoelektrischen Prinzip. Eine Maßverkörperung M in Form eines Maßstabes ist an einem nicht dargestellten Maschinen-Bauteil, beispielsweise einem Maschinenschlitten befestigt und mit diesem in Meßrichtung X verschiebbar.

Eine Abtasteinrichtung A weist die üblichen Bauelemente wie Beleuchtung L1, L2, Kondensoren K1, K2, Photoelemente P1, P2, eine Auswerteeinrichtung U sowie eine Abtastplatte AP auf, und ist ortsfest an einem ebenfalls nicht dargestellten Maschinen-Bauteil, beispielsweise einem Maschinenbett befestigt. An die Auswerteeinrichtung U ist ein Vorwärts-/Rückwärtszähler VRZ angeschlossen, an dem die Meßwerte in digitaler Form abgelesen werden können.

Es versteht sich, daß der konstruktive Aufbau von der gezeigten Form abweichen kann, so ist im allgemeinen eine Lampe und ein Kondensor ausreichend, um die Abtaststelle zu beleuchten. Ferner muß die Anzeige des Meßwertes nicht in Form von Ziffern im Vorwärts-/Rückwärtszähler vorgenommen werden, sondern der Meßwert kann unmittelbar einer numerischen Steuerung zur Weiterverarbeitung zugeführt werden und ist gegebenenfalls auf einem Bildschirm dargestellt. Des weiteren ist die Erfindung nicht auf lichtelektrische Meßeinrichtungen beschränkt, sondern es können bei entsprechender Umgestaltung der Bauelemente auch magnetische, induktive, kapazitive und/oder elektromechanische Abtastprinzipien zur Anwendung kommen.

Im folgenden soll jedoch die Erfindung anhand der photoelektrischen Längenmeßeinrichtung 1 gemäß Figur 1 weiter beschrieben werden.

Wie aus Figur 2 ersichtlich ist, weist die Maßverkörperung M eine Gitterteilung T mit einer Gitterkonstanten G auf. Parallel zur Gitterteilung T sind auf der Maßverkörperung M Referenzmarken R1 und R2 aufgebracht, die in Meßrichtung X im Abstand D hintereinander angeordnet sind. Die Referenzmarken R1 und R2 sind als Gitter ausgebildet, die aus einer unregelmäßigen Folge von Gitterstrichen bestehen. Im Gegensatz zu Referenzmarken nach dem Stand der Technik (die Breite des feinsten Referenzmarken-Gitterstriches entspricht dort der Gitterkonstanten G der Gitterteilung T), beträgt bei den erfindungsgemäßen Referenzmarken R1 und R2 die Breite des feinsten Referenzmarken-Gitterstriches ein Vielfaches der Gitterkonstanten G, also $n \cdot G$ (n=beliebige positive Zahl).

In Figur 3 ist die Abtastplatte AP aus der Abtasteinrichtung A gemäß der Figur 1 schematisch dargestellt. Die Abtastplatte AP weist in herkömmlicher Weise Abtastelemente AT zur Abtastung der Gitterteilung T der Maßverkörperung M auf. Auf die Ausgestaltung dieser Abtastelemente AT zur Erkennung der Bewegungsrichtung der Maßverkörperung M braucht hier nicht näher Bezug genommen werden, da dies hinlänglich bekannter Stand der Technik ist. Außer den genannten Abtastelementen AT sind noch voneinander in Meßrichtung X beabstandete Abtastelemente AR1 und AR2 zur Abtastung der Referenzmarken R1 und R2 vorgesehen. Im Gegensatz zum Stand der Technik wie z.B. DE—C—29 52 106 ist jedoch der Abstand AD der beiden Abtastelemente AR1 und AR2 nicht identisch mit dem Abstand D der Referenzmarken R1 und R2 auf der Maßverkörperung M, sondern er weicht geringfügig von ihm ab. Der gegenseitige Abstand AD der Abtastelemente AR1 und AR2 kann in Meßrichtung X geringfügig kleiner oder größer als der Abstand D zwischen den Referenzmarken R1 und R2 sein.

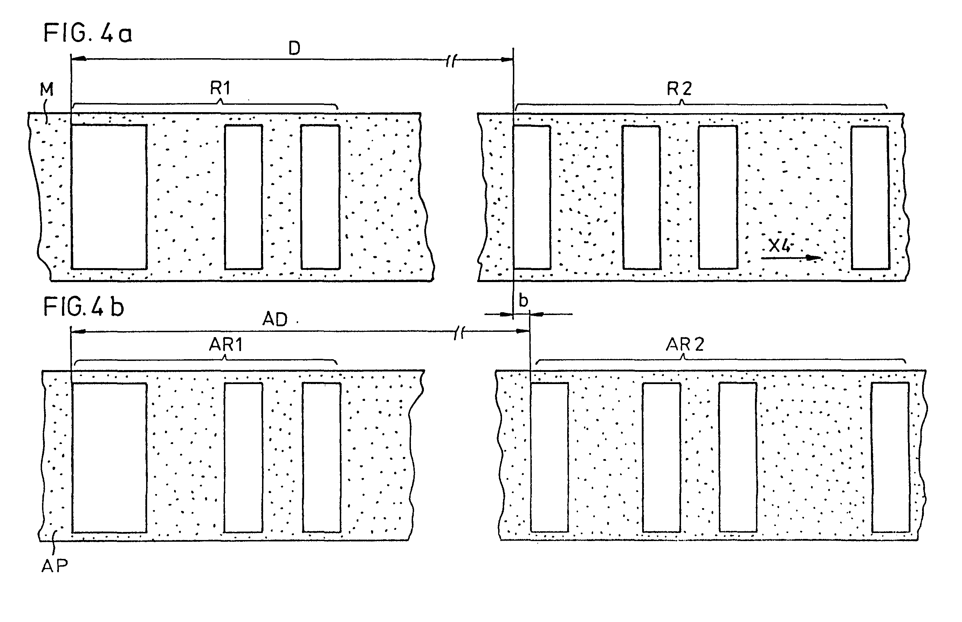

Hinsichtlich der durch die Referenzmarken-Abtastung gewonnenen Signale ergibt sich dadurch eine Verschiebung, die anhand der Figuren 4a bis 4d erläutert wird. In Figur 4a wird ein Ausschnitt aus der Maßverkörperung M dargestellt, wie sie in Figur 2 gezeigt ist. Die Referenzmarken R1 und R2, im Abstand D hintereinander angeordnet, sind nochmals vereinfacht gezeigt, um die Signalverläufe zeichnerisch gut darstellen zu können.

Die zugehörigen Abtastelemente AR1 und AR2 sind im Abstand AD hintereinander auf der Abtastplatte AP angeordnet, wie aus Figur 4b ersichtlich ist. Diese Darstellung entspricht der Abtastplatte AP aus Figur 3. In den Figuren 4a und 4b sind sowohl die Gitterteilung T als auch die Abtastelemente AT für die Gitterteilung T aus Gründen der Übersichtlichkeit nicht gezeigt.

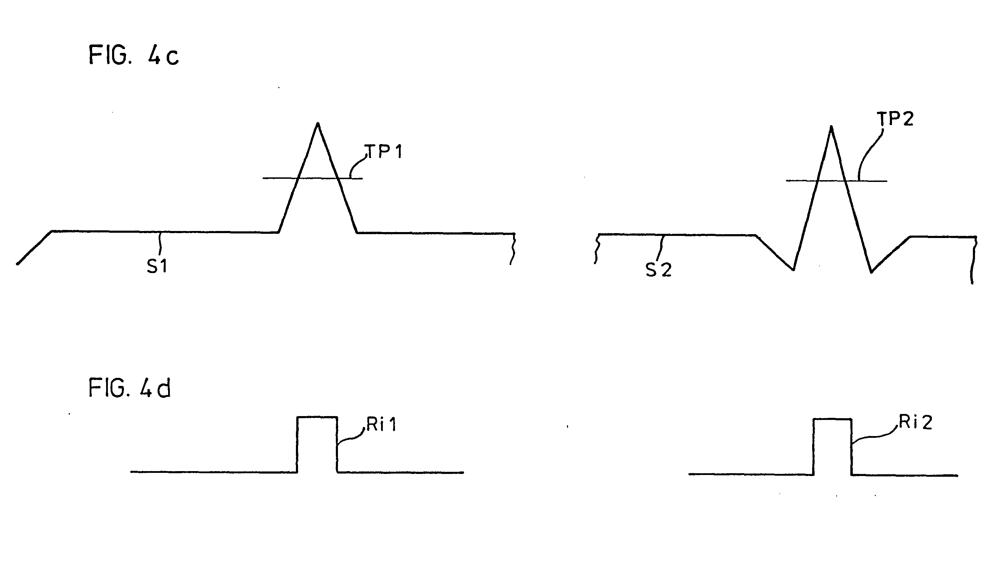

Wird nun die Maßverkörperung M gegenüber der Abtastplatte AP in der durch den Pfeil X4 angegebenen Richtung von links nach rechts verschoben, so entsteht durch Abtasten der Referenzmarke R1 mit dem Abtastelement AR1 ein Referenzsignal S1, wie es in dem linken Teil der Figur 4c gezeigt ist. Die Überhöhung des Referenzsignales S1—in das der Triggerpegel TP1 eingezeichnet ist—tritt auf, wenn das Abtastelement AR1 deckungsgleich mit der Referenzmarke R1 ist, wie dies aus dem Stand der Technik ja bereits bekannt ist.

Wird nun die Maßverkörperung M weiter in Richtung des Pfeiles X4 verfahren, so tritt das Referenzsignal S2 auf, wie es im rechten Teil von Figur 4c gezeigt ist. Die zeitliche Verzögerung des Auftretens des Referenzsignals S2 gegenüber dem Referenzsignal S1 ist aufgrund des räumlichen Versatzes des Abtastelementes AR2 entstanden, wie bereits beschrieben wurde. Auch beim Referenzsignal S2 wurde der Triggerpegel TP2 eingezeichnet.

In Figur 4d sind lagerichtig unter den Referenzsignalen S1 und S2 (s. Figur 4c) die getriggerten Referenzimpulse Ri1 und Ri2 gezeigt. Die Breite der jeweiligen Referenzimpulse Ri1 und Ri2 entspricht der Breite der Referenzsignale S1 und S2 an ihren jeweiligen Triggerpegeln TP1 und TP2.

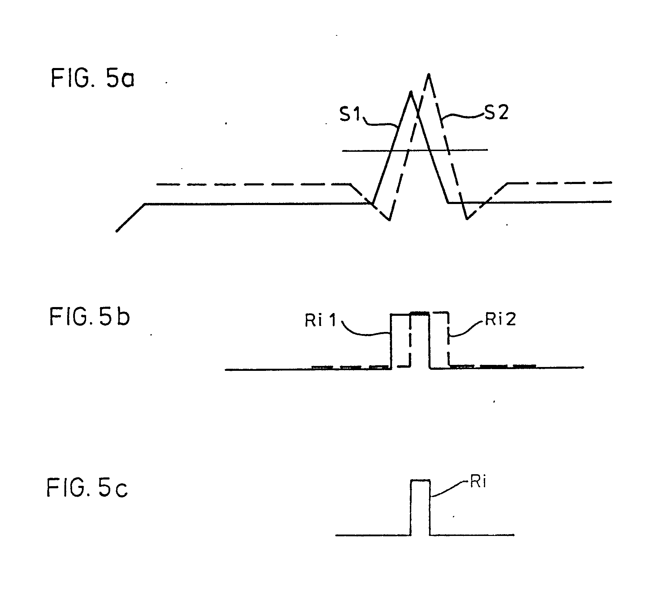

In Figur 5a sind die Referenzsignale S1 und S2 zeitlich überlagert dargestellt und in Figur 5b ist diese zeitliche Überlagerung an den getriggerten Referenzimpulsen Ri1 und Ri2 gezeigt.

In Figur 5c ist schließlich der resultierende Referenzimpuls Ri gezeichnet, der sich in dieser Breite bzw. in dieser Impulsdauer ergibt, wenn die getriggerten Referenzimpulse Ri1 und Ri2 entsprechend verknüpft werden, beispielsweise durch ein logisches UND-Glied.

Auf diese Weise erhält man einen Referenzimpuls Ri mit der geforderten geringen Impulsdauer aus zwei verhältnismäßig breiten Referenzsignalen S1 und S2.

Zurückkommend auf die eingangs geschilderte Bedingung für die Größe des Abtastabstandes a ergibt sich folgende Situation: Da bei den erfindungsgemäßen Referenzmarken R1 und R2 die feinste Strichbreite nicht mehr G, sondern $n \cdot G$ ist, beträgt der zulässige Abtastabstand $a=(n \cdot G)^2/\lambda$ und ist für n=4 beispielsweise 16 mal so groß wie bisher. Trotzdem wird, wie aus der Beschreibung ersichtlich ist, ein Referenzimpuls von genügend geringer Impulsdauer erzeugt.

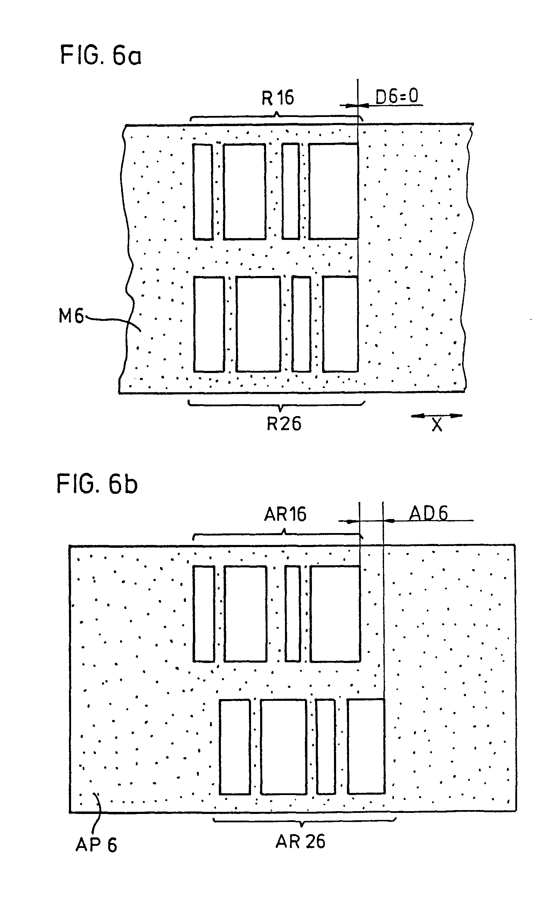

Aus den Figuren 6a und 6b ist ersichtlich, daß die Anordnungen der Referenzmarken R16, R26 und der zugehörigen Abtastelemente AR16, AR26 nicht zwangsläufig in Meßrichtung X hintereinander erfolgen muß. Lediglich muß in Meßrichtung X eine Abstandsdifferenz AD6 vorhanden sein. Im gezeigten Sonderfall ist in Meßrichtung X der gegenseitige Abstand D6 der Referenzmarken R16 und R26 gleich Null.

## Patentansprüche

1. Meßvorrichtung zum Messen der Lage zweier relativ zueinander beweglicher Objekte, mit wenigstens zwei voneinander beabstandeten un an einem der Objekte anbringbaren Referenzmarken (R1, R2), die durch voneinander beabstandete und am anderen Objekte vorsehbare Abtastelemente (AR1, AR2) abtastbar sind, und mit einer Auswerteeinrichtung (U) zum Auswerten der von den Abtastelementen (AR1, AR2) erzeugten Referenzsignale (S1, S2), wobei sich der gegenseitige Abstand der Referenzmarken (R1, R2) vom gegenseitigen Abstand der Abtastelemente (AR1, AR2) derart unterscheidet, daß sich die durch Abtastung der Referenzmarken (R1, R2) erzeugten Referenzsignale (S1, S2) teilweise überlappen, dadurch gekennzeichnet, daß die Auswerteeinrichtung (U) so ausgebildet ist, daß sie aus den sich teilweise überlappenden Referenzsignalen (S1, S2) einen resultierenden Referenzimpuls (Ri) bildet, der die Breite der Überlappung der einen jeweiligen Triggerpegel übersteigenden Signalanteile der Referenzsignale (S1, S2) aufweist.

2. Meßvorrichtung nach Anspruch 1, die eine inkrementale, photoelektrische Positionsmeßeinrichtung (1) ist, bei der die Referenzmarken (R1, R2) in Form unregelmäßiger Gitter auf einer Maßverkörperung (M) in Meßrichtung X im Abstand (D) hintereinander angeordnet sind, und bei der die Abtastung der Referenzmarken (R1, R2) durch eine Abtasteinrichtung (A) erfolgt, in der die Abtastelemente (AR1, AR2) mit einem vom Abstand (D) der Referenzmarken (R1, R2) abweichenden Abstand (AD) hintereinander angeordnet sind und ebenfalls unregelmäßige Gitter aufweisen, wobei jeweils die zusammengehörigen Gitter von Referenzmarke und Abtastelement (R1, AR1 bzw. R2, AR2) die gleiche Gitterverteilung aufweisen.

3. Meßvorrichtung nach Anspruch 1, die eine inkrementale, photoelektrische Positionsmeßeinrichtung (1) ist, bei der die Referenzmarken (R16, R26) in Form unregelmäßiger Gitter auf einer Maßverkörperung (M6) parallel zueinander—in Meßrichtung X im Abstand (D6)—angeordnet sind, und bei der die Abtastung der Referenzmarken (R16, R26) durch eine Abtasteinrichtung (AP6) erfolgt, in der die Abtastelemente (AR16, AR26)—mit einem in Meßrichtung X vom Abstand (D6) der Referenzmarken (R16, R26) abweichenden Abstand (AD6)—parallel zueinander angeordnet sind und ebenfalls unregelmäßige Gitter aufweisen, wobei jeweils die zusammengehörigen Gitter von Referenzmarke und Abtastelement (R16, AR16 bzw. R26, AR26) die gleiche Gitterverteilung aufweisen.

## Revendications

1. Dispositif de mesure pour mesurer la position de deux objets mobiles l'un par rapport à l'autre, comprenant au moins deux marques de référence (R1, R2) espacées l'une de l'autre et susceptibles d'être rapportées sur l'un des objets, ces marques pouvant être explorées par des éléments d'exploration (AR1, AR2) qui sont espaces l'un de l'autre et qui peuvent être prévus sur l'autre objet, et un dispositif d'exploitation (U) pour exploiter les signaux de référence (S1, S2) produits par les éléments d'exploration (AR1, AR2), la distance réciproque des marques de référence (R1, R2) différant de la distance réciproque des éléments d'exploration (AR1, AR2) de telle manière que les signaux de référence (S1, S2) produits par exploration des marques de référence (R1, R2) se recouvrent partiellement, caractérisé par le fait que le dispositif d'exploitation (U) est réalisé de manière à former, à partir des signaux de référence (S1, S2) se recouvrant partiellement, une inpulsion de référence résultante (Ri) qui présente la largeur du recouvrement des parties des signaux de référence (S1, S2) dépassant un niveau de déclenchement.

2. Dispositif de mesure suivant la revendication 1, constituant un dispositif de mesure de position (1) photoélectrique incrémental dans lequel les marques de référence (R1, R2) sont disposées sous la forme de grilles non-uniformes sur une échelle de mesure (M) à une distance (D) l'une derrière l'autre dans la direction de mesure X, et dans lequel l'exploration des marques de référence (R1, R2) s'effectue par un dispositif d'exploration (A) dont les éléments d'exploration (AR1, AR2) sont disposés l'un derrière l'autre à une distance (AD) différant de la distance (D) des marques de référence (R1, R2) et présentent également des grilles non-uniformes, les grilles correspondantes de la marque de référence et de l'élément d'exploration (R1, AR1 ou R2, AR2) présentant la même répartition de grilles.

3. Dispositif de mesure suivant la revendication 1, constituant un dispositif de mesure de position (1) photoélectrique incrémental, dans lequel les marques de référence (R16, R26) sont disposées sous la forme de grilles non-uniformes sur une échelle de mesure (M6) parallèlement l'une à l'autre—à une distance (D6) dans la direction de mesure X —, et dans lequel d'exploration des marques de référence (R16, R26) s'effectue par un dispositif d'exploration (AP6) dont les éléments d'exploration (AR16, AR26) sont disposés parallèlement l'un à l'autre—à une distance (AD6) différant dans la direction de mesure X de la distance (D6) des marques de référence (R16, R26)—et présentent également des grilles non-uniformes, les grilles correspondantes de la marque de référence et de l'élément d'exploration (R16, AR16 ou R26, AR26) présentent la même répartition de grilles.

## Claims

1. Measuring device for measuring the position of two objects movable relative to one another, with at least two reference marks (R1, R2) spaced from one another and capable of application to one of the objects and which can be sensed by sensing elements (AR1, AR2) spaced from one another and capable of being provided on the other object, and with a processing unit (U) for evaluating the reference signals (S1, S2) generated by the sensing elements (AR1, AR2), wherein the mutual spacing of the reference marks (R1, R2) differs from the mutual spacing of the sensing elements (AR1, AR2) in such a way that the reference signals generated by sensing the reference marks (R1, R2) partially overlap, characterized in that the processing unit (U) is so constructed that it forms a resultant reference pulse (R1) from the partially overlapping reference signals (S1, S2) which pulse has the width of the overlap of signal parts of the reference signals (S1, S2) exceeding a given trigger level.

2. Measuring device according to claim 1, which is an incremental, photoelectric position measuring device (1) in which the reference marks (R1, R2) are arranged sequentially in the measuring direction X at a spacing (D) in the form of an irregular grating on a scale body (M), and in which the sensing of the reference marks (R1, R2), takes place by a sensing device (A) in which the sensing elements (AR1, AR2) are arranged sequentially with a spacing (AD) differing from the spacing of the reference marks (R1, R2) and likewise comprise irregular gratings, wherein each of the associated gratings of reference mark and sensing element (R1, AR1 or R2, AR2) have the same grating distribution.

3. Measuring device according to claim 1, which is an incremental photoelectric position measuring device, in which the reference marks (R16, R26) are arranged parallel to one another in the form of irregular gratings on a scale body (M6)—in the measuring direction X at a spacing (D6)—and in which the sensing of the reference marks (R16, R26) is effected by a sensing device (AP6) in which the sensing elements (AR16, AR26)—with a spacing (AD6) in the measuring direction X differing from the spacing (D6) of the reference marks (R16, R26)—are arranged parallel to one another and likewise comprise irregular gratings, wherein each of the associated gratings of reference mark and sensing element (R16, AR16 or R26, AR26) have the same grating distribution.

FIG. 1

FIG.2

FIG.3

FIG. 4a

FIG. 4b

FIG. 4c

TP1

S1

FIG. 4d

Ri1

TP2

S2

Ri2

EP 0 194 611 B1

FIG. 5a

S1 — S2

FIG. 5b

Ri 1 — Ri 2

FIG. 5c

Ri

FIG. 6a

R 16

D6=0

M6

R26

X

FIG. 6b

AR16

AD6

AP 6

AR 26